# EUROPÄISCHE PATENTSCHRIFT

(11) **EP 1 245 470 B1**
(45) Veröffentlichungstag und Bekanntmachung des Hinweises auf die Patenterteilung: **23.04.2008**
(21) Anmeldenummer: 02001966.7
(22) Anmeldetag: 02.02.2002
(51) Int. Cl.: B62B 5/00

(54) **Stossschutzelement für einen Transportwagen**
Shock protecting element for a transport trolley
Elément de protection contre les chocs pour un chariot de transport

(30) Priorität: 30.03.2001 DE 10115886
(43) Veröffentlichungstag der Anmeldung: 02.10.2002
(73) Patentinhaber: BLANCO CS GmbH + Co KG, 75038 Oberderdingen (DE)
(72) Erfinder: Böss, Ralf, 76703 Kraichtal/Oö (DE); Hintermayer, Michael, 76698 Ubstadt-Weiher (DE); Hautzinger, Josef, 75057 Kürnbach (DE)
(74) Vertreter: Hoeger, Stellrecht & Partner Patentanwälte

(56) Entgegenhaltungen:
- DE-A- 2 809 909
- DE-A- 3 739 183
- DE-U- 29 721 771
- FR-A- 2 728 036
- FR-A- 2 738 540
- FR-A- 2 821 041
- US-A- 4 635 951

## Beschreibung

Die vorliegende Erfindung betrifft ein Stoßschutzelement für einen Transportwagen, insbesondere für einen Servierwagen.

Solche Stoßschutzelemente werden an der Peripherie des Transportwagens so angebracht, daß externe Objekte, wie beispielsweise Wände, Möbelstücke oder andere Gegenstände, nicht direkt gegen Konstruktionselemente des Transportwagens, sondern gegen das Stoßschutzelement stoßen, so daß der externe Stoß durch das Stoßschutzelement abgefedert wird.

Insbesondere ist es bekannt, Auflageborde von Servierwagen an ihren Eckbereichen mit Stoßschutzelementen zu versehen, die als winkelförmige Stoßschutzecken ausgebildet sind.

Um diese Stoßecken an dem Auflagebord anzubringen, werden zunächst Löcher in eine Seitenwand des Auflagebords gebohrt, Einnietmuttern in diesen Löchern fixiert, Befestigungsschrauben durch Schraubenkanäle in der Stoßecke in die Einnietmuttern eingeführt und verschraubt und schließlich die Schraubenkanäle der Stoßecke mit Verschlußstopfen verschlossen, um eine optisch einheitliche Sichtfläche der Stoßschutzecke zu erzeugen.

Dieses Montageverfahren erfordert eine Vielzahl von Einzelteilen und eine erhebliche Montagezeit.

Die DE 297 21 771 U offenbart ein Stoßschutzelement mit den Merkmalen des Oberbegriffs von Anspruch 1.

Die FR-A-2 728 036 offenbart ein Stoßschutzelement in Form eines Bandes aus gummiertem thermoplastischem Material, das mit einer Klemmnut versehen ist.

Die DE 37 39 183 A offenbart ein Stoßschutzelement in Form einer Stoßschutzleiste aus elastischem Material mit einem federnden Bogen und mit Stegen, mittels welcher die Stoßschutzleiste durch Klemmwirkung an einem Aufbaurahmen gehalten ist.

Die DE 28 09 909 A offenbart ein Stoßschutzelement für einen Einkaufswagen in Form einer Stoßleiste aus elastischem Material mit Einknöpfhalterungen, die zwischen Tragleisten des Einkaufswagens einklemmbar sind.

Die FR-A-2 738 540 offenbart ein Stoßschutzelement in Form einer Stoßschutzleiste mit einer Aufnahmenut für ein starres Abschlusselement.

Der vorliegenden Erfindung liegt die Aufgabe zugrunde, ein Stoßschutzelement für einen Transportwagen der eingangs genannten Art zu schaffen, welches unter geringerem Aufwand an Montagezeit und Montagematerial montierbar ist.

Diese Aufgabe wird durch ein Stoßschutzelement nach Anspruch 1 gelöst.

Das erfindungsgemäße Konzept bietet den Vorteil, dass das Stoßschutzelement durch Verrastung an dem Konstruktionselement des Transportwagens gehalten wird, ohne dass hierfür das Konstruktionselement des Transportwagens mit Bohrungen und Einnietmuttern versehen werden muss und ohne dass hierfür von der Sichtseite des Stoßschutzelementes aus Schrauben durch Schraubenkanäle in dem Stoßschutzelement in diese Muttern eingedreht werden müssen.

Eine erhebliche Einsparung an Montagezeit und an Montagematerial wird hierdurch erzielt.

Da das Konstruktionselement des Transportwagens, mit welchem das Stoßschutzelement verrastet wird, für diese Verrastung nicht gesondert vorbereitet werden muss, ist es möglich, ein und dasselbe Konstruktionselement sowohl für Ausführungen des Transportwagens mit Stoßschutzelement als auch für Ausführungen des Transportwagens ohne Stoßschutzelement zu verwenden, da das zur Verrastung mit dem Stoßschutzelement vorgesehene Konstruktionselement des Transportwagens keinerlei Bohrungen oder Einnietmuttern aufweisen muss, welche bei der Ausführung des Transportwagens ohne Stoßschutzelement störend wirken würden.

Eine besonders sichere Verrastung des Rastelements des Stoßschutzelements mit dem Konstruktionselement des Transportwagens wird erreicht, wenn das Rastelement eine mit einer Hinterschneidung versehene Rastaufnahme für das Konstruktionselement des Transportwagens aufweist.

Ferner kann die Kraft, mit welcher das Stoßschutzelement an dem Konstruktionselement gehalten wird, dadurch erhöht werden, dass das Stoßschutzelement mehrere längs einer Längsrichtung des Stoßschutzelements voneinander beabstandete Rastelemente umfasst.

Zur besonders sicheren Festlegung des Stoßschutzelements an dem Konstruktionselement des Transportwagens eignet sich das erfindungsgemäße Stoßschutzelement, da es mehrere Rastelemente, die längs einer ersten Längsrichtung voneinander beabstandet angeordnet sind, und mehrere Rastelemente, die längs einer zweiten Längsrichtung voneinander beabstandet angeordnet sind, umfasst, wobei die erste Längsrichtung und die zweite Längsrichtung quer, vorzugsweise im wesentlichen senkrecht, zueinander ausgerichtet sind.

Ein solches Stoßschutzelement kann insbesondere als Stoßschutzecke ausgebildet sein.

Die Form der Rastelemente des Stoßschutzelementes ist grundsätzlich beliebig.

Bei einer bevorzugten Ausführungsform des Stoßschutzelementes ist vorgesehen, dass das Rastelement als Rippe ausgebildet ist.

Die korrekte Ausrichtung des Stoßschutzelementes relativ zu dem Transportwagen wird dadurch erleichtert, dass das Stoßschutzelement eine rohrförmige Halterung für ein Konstruktionselement des Transportwagens umfasst.

Insbesondere kann vorgesehen sein, dass das Stoßschutzelement eine rohrförmige Halterung für einen Bügel des Transportwagens und/oder für einen Haltezapfen einer Tragrolle des Transportwagens umfasst.

Um das Stoßschutzelement zuverlässig an dem Transportwagen zu sichern, kann vorgesehen sein, dass die rohrförmige Halterung an dem Konstruktionselement des Transportwagens mittels eines Befestigungsmittels, beispielsweise mittels einer Befestigungsschraube, lösbar festlegbar ist.

Zu diesem Zweck kann die rohrförmige Halterung insbesondere mit einer Durchgangsöffnung für das Befestigungsmittel versehen sein.

Ergänzend oder alternativ zu einer Festlegung der rohrförmigen Halterung an dem Konstruktionselement des Transportwagens mittels eines Befestigungsmittels kann auch vorgesehen sein, dass die rohrförmige Halterung im montierten Zustand des Stoßschutzelements auf einer Stützfläche eines Konstruktionselements des Transportwagens aufsitzt.

Dies bietet den Vorteil, dass es nicht erforderlich ist, die rohrförmige Halterung mittels eines zusätzlichen Befestigungsmittels an dem Konstruktionselement festzulegen.

Das Stoßschutzelement ist dann besonders einfach herzustellen und zu montieren, wenn vorteilhafterweise vorgesehen ist, dass das Stoßschutzelement einstückig ausgebildet ist.

Bei einer bevorzugten Ausgestaltung der Erfindung ist vorgesehen, dass das Stoßschutzelement aus einem Kunststoffmaterial, insbesondere aus Polyethylen, hergestellt ist.

Das Stoßschutzelement kann insbesondere mittels eines Spritzgießverfahrens hergestellt werden.

Anspruch 12 ist auf einen Transportwagen, insbesondere einen Servierwagen, gerichtet, der mindestens ein erfindungsgemäßes Stoßschutzelement umfasst.

Zum sicheren Verrasten mit dem Stoßschutzelement umfasst der Transportwagen vorteilhafterweise ein Blechformteil mit einer Einrollung, wobei die Einrollung mit einem Rastelement des Stoßschutzelements verrastet ist.

Insbesondere kann vorgesehen sein, dass das Blechformteil neben der Einrollung auch eine Auflagefläche für zu transportierende Gegenstände, beispielsweise Speisenbehälter oder Speisentabletts, aufweist.

Bei einer besonderen Ausgestaltung des Transportwagens umfasst der Transportwagen mindestens eine Tragrolle mit einem Haltezapfen, wobei der Haltezapfen der Tragrolle zumindest teilweise in der rohrförmigen Halterung des Stoßschutzelements aufgenommen ist. Auf diese Weise ist es möglich, die Festlegung der Tragrolle an dem Transportwagen und die Festlegung des Stoßschutzelementes an dem Transportwagen in effizienter Weise miteinander zu verbinden.

Ferner kann vorgesehen sein, dass der Transportwagen mindestens einen Bügel umfasst und dass der Bügel zumindest teilweise in der rohrförmigen Halterung aufgenommen ist.

Das Stoßschutzelement kann ohne zusätzliches Befestigungsmittel an dem Transportwagen angeordnet sein, wenn vorteilhafterweise vorgesehen ist, dass der Transportwagen ein Stützelement mit einer Stützfläche umfasst und dass das Stoßschutzelement auf der Stützfläche des Stützelements aufsitzt.

Das Stoßschutzelement sitzt vorzugsweise mit der rohrförmigen Halterung auf der Stützfläche auf.

Weitere Merkmale und Vorteile sind Gegenstand der nachfolgenden Beschreibung und zeichnerischen Darstellung von Ausführungsbeispielen.

In den Zeichnungen zeigen:
- Fig. 1: eine perspektivische Darstellung einer ersten Ausführungsform eines Servierwagens mit Stoßschutzelementen, mit Blickrichtung von oben;
- Fig. 2: eine perspektivische Darstellung des Servierwagens aus Fig. 1, mit Blickrichtung von unten;
- Fig. 3: eine vergrößerte Darstellung des Bereichs I aus Fig. 2;
- Fig. 4: eine vergrößerte Darstellung des Bereichs II aus Fig. 2;
- Fig. 5: einen schematischen Schnitt durch ein unteres Bord des Servierwagens und eine Rastrippe eines Stoßschutzelements;
- Fig. 6: eine perspektivische Darstellung eines Stoßschutzelements, mit Blickrichtung von unten;
- Fig. 7: eine Draufsicht auf das Stoßschutzelement aus Fig. 6, mit Blickrichtung von unten;
- Fig. 8: eine Seitenansicht auf das Stoßschutzelement aus Fig. 7, mit Blickrichtung in Richtung des Pfeiles "8" in Fig. 7;
- Fig. 9: eine teilweise geschnittene Darstellung einer Rastrippe des Stoßschutzelements aus den Fig. 6 bis 8, längs der Linie 9 - 9 in Fig. 7;
- Fig. 10: eine perspektivische Darstellung einer zweiten Ausführungsform eines Servierwagens mit Stoßschutzelementen, mit Blickrichtung von oben;
- Fig. 11: eine perspektivische Darstellung des Servierwagens aus Fig. 10, mit Blickrichtung von unten;
- Fig. 12: eine vergrößerte Darstellung des Bereichs III aus Fig. 11; und
- Fig. 13: eine vergrößerte Darstellung des Bereichs IV aus Fig. 12.

Gleiche oder funktional äquivalente Elemente sind in allen Figuren mit denselben Bezugszeichen bezeichnet.

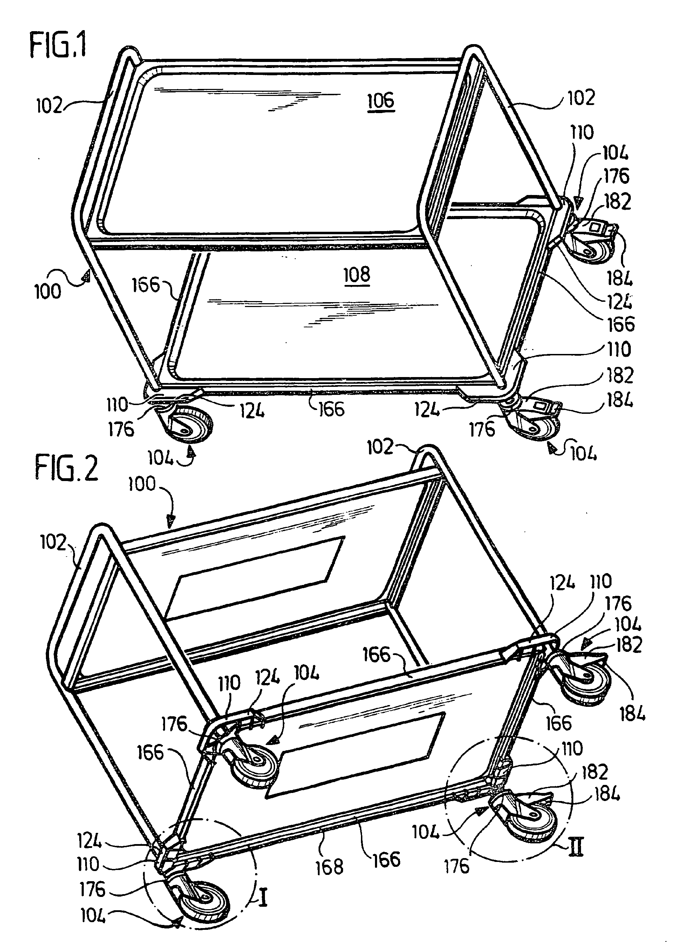

Eine in den Fig. 1 bis 9 dargestellte erste Ausführungsform eines als Ganzes mit 100 bezeichneten Servierwagens umfaßt zwei Bügel 102, beide im wesentlichen in Form eines umgedrehten U, die an ihren unteren Enden mit jeweils einer Tragrolle 104 verbunden sind.

Zur Aufnahme der mittels des Servierwagens 100 zu transportierenden Gegenstände, beispielsweise Speisenbehälter und/oder Serviertabletts, umfaßt der Servierwagen 100 ein im wesentlichen rechteckiges oberes Auflagebord 106 und ein im wesentlichen rechteckiges unteres Auflagebord 108.

Beide Auflagebords 106, 108 sind an ihren vier Ecken mit den Bügeln 102, beispielsweise durch Verschweißung, verbunden.

Um das untere Auflagebord 108 und die unteren Bereiche der Bügel 102 vor direkten Stößen mit Wänden, mit Mobiliar oder mit anderen Objekten zu schützen, ist der Servierwagen 100 im Bereich der vier Ecken des unteren Auflagebords 108 mit jeweils einem Stoßschutzelement in Form einer Stoßschutzecke 110 versehen.

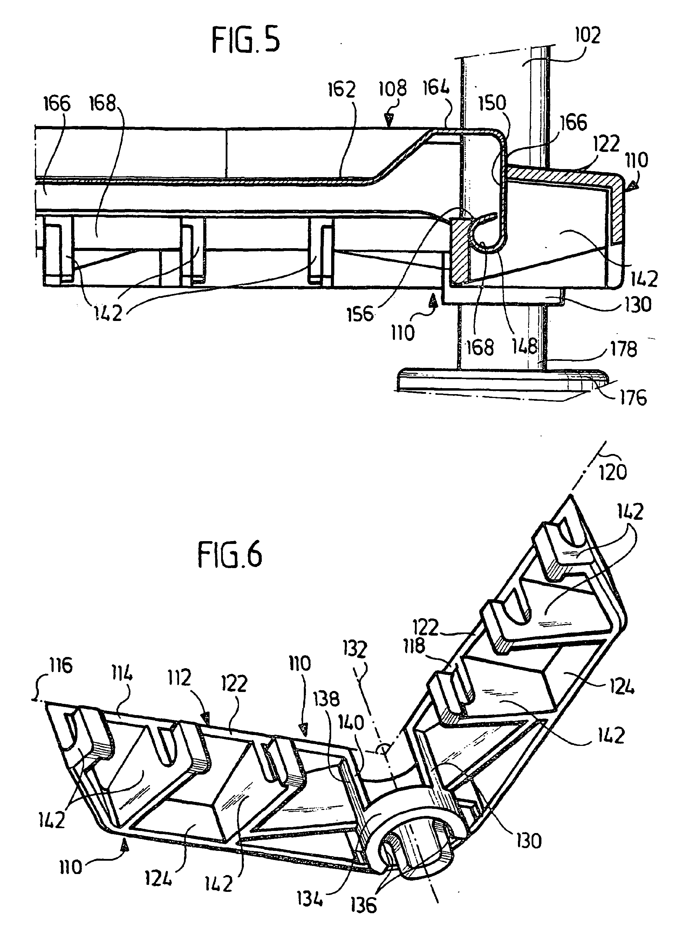

Der Aufbau der Stoßschutzecken 110 ist am besten aus den Fig. 6 bis 9 zu ersehen, in denen eine solche Stoßschutzecke im Detail dargestellt ist.

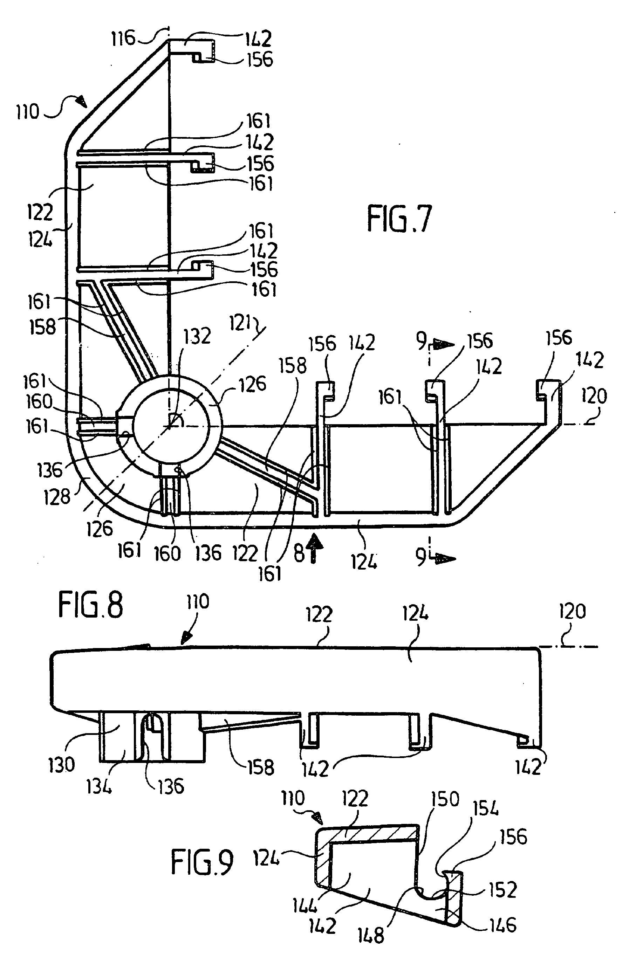

Die Stoßschutzecke 110 umfaßt einen Korpus 112 in Form eines rechteckigen Winkelelements, mit einem ersten Schenkel 114, der sich längs einer ersten Längsrichtung 116 erstreckt, und einem zweiten Schenkel 118, der sich längs einer zweiten Längsrichtung 120 erstreckt, wobei sich die erste Längsrichtung 116 und die zweite Längsrichtung 120 in einem rechten Winkel schneiden (Fig. 6, 7).

Die Stoßschutzecke 110 ist spiegelsymmetrisch zur Winkelhalbierenden 121 der ersten Längsrichtung 116 und der zweiten Längsrichtung 120 ausgebildet.

Jeder der Schenkel 114, 118 umfaßt eine im montierten Zustand der Stoßschutzecke 110 im wesentlichen horizontal ausgerichtete Deckwand 122, welche sich an ihrem freien Ende zur Innenseite der Stoßschutzecke 110 hin verjüngt, und eine im montierten Zustand der Stoßschutzecke 110 im wesentlichen vertikal ausgerichtete Seitenwand 124, welche sich von dem äußeren Rand der Deckwand 122 aus nach unten erstreckt und dem Verlauf des äußeren Randes der Deckwand 122 folgt.

Die Deckwände 122 der beiden Schenkel 114, 118 sind über einen viertelringförmigen Eckdeckwandbereich 126 miteinander verbunden.

Die Seitenwände 124 der beiden Schenkel 114, 118 sind über einen viertelkreisförmig gekrümmten Eckseitenwandbereich 128 miteinander verbunden.

An den Eckdeckwandbereich 126 und die Ränder der Deckwände 122 der beiden Schenkel 114 und 118 ist eine im wesentlichen zylinderrohrförmige Haltemanschette 130 angeformt, deren Achse 123 sich senkrecht zu der ersten Längsrichtung 116 und senkrecht zu der zweiten Längsrichtung 120 erstreckt.

Die Haltemanschette 130 erstreckt sich nach unten über die Seitenwände 124 hinaus und ist in diesem überstehenden Unterteil 134 mit zwei vertikalen Durchtrittsschlitzen 136 versehen, welche sich längs der Achse 132 der Haltemanschette 130 erstrecken und sich zum unteren Rand der Haltemanschette 130 hin öffnen.

Wie am besten aus der Draufsicht der Fig. 7 zu ersehen ist, sind die beiden Durchtrittsschlitze 136 in Bezug auf die Achse 132 der Haltemanschette 130 in einem Winkelabstand von 90° angeordnet, und zwar auf der den Seitenwänden 124 zugewandten Seite der Haltemanschette.

An der Innenseite ihres Oberteils 138 ist die Haltemanschette 130 mit einer Ausnehmung 140 versehen, welche sich über einen Winkel von 90° von der Deckwand 122 des ersten Schenkels 114 zu der Deckwand 122 des zweiten Schenkels 118 erstreckt.

Ferner sind die beiden Schenkel 114, 118 der Stoßschutzecke 110 jeweils mit mehreren, beispielsweise drei, Rastrippen 142 versehen, welche sich von der jeweiligen Seitenwand 124 senkrecht zur jeweiligen Längsrichtung 116 bzw. 120 zur Innenseite der Stoßschutzecke 110 hin erstrecken und an ihrem oberen Ende an die jeweilige Deckwand 122 angrenzen.

Wie am besten aus der Fig. 9 zu ersehen ist, weisen die Rastrippen 142 einen trapezförmigen äußeren Bereich 144 auf, der an seinem äußeren Rand an die jeweilige Seitenwand 124 und an seinem oberen Rand an die jeweilige Deckwand 122 angrenzt, sowie einen sich an den äußeren Bereich 144 nach innen hin anschließenden, ebenfalls im wesentlichen trapezförmigen inneren Bereich 146, der eine geringere Höhe aufweist als der äußere Bereich 144 und in dem eine nach oben offene Rastaufnahme 148 vorgesehen ist.

Der Rand der Rastaufnahme 148 setzt sich aus dem im wesentlichen geradlinigen, vertikalen Rand 150 des äußeren Bereichs 144 der Rastrippe 142 und aus einem sich nach unten daran anschließenden Kreisbogen 152 von ungefähr 225° zusammen, dessen Endabschnitt 154, der sich über einen Winkel von ungefähr 45° erstreckt, eine Rastnase 156 berandet, welche den inneren Abschluß des inneren Bereichs 146 der Rastrippe 142 bildet.

Wie aus den Fig. 6 und 7 zu ersehen ist, ist jede der Rastrippen 142 im Bereich der Rastnase 156 verstärkt, d.h. die Rastrippe 142 weist im Bereich der Rastnase 156 eine höhere Wandstärke auf, um die einer Verformung der Rastnase 156 entgegenwirkende elastische Rückstellkraft zu erhöhen.

Wie aus den Fig. 6 und 7 zu ersehen ist, weisen die jeweils am weitesten von der Haltemanschette 130 entfernten Rastrippen 142 beider Schenkel 114, 118 keinen äußeren Bereich 144 auf; vielmehr wird bei diesen äußersten Rastrippen 142 die Rastaufnahme 148 nach außen hin durch die Seitenwand 124 selbst begrenzt. Im übrigen stimmt der Aufbau dieser Rastrippen 142 jedoch mit dem Aufbau der weiter zur Haltemanschette 130 hin gelegenen Rastrippen 142 überein.

Um die Stabilität der Stoßschutzecke 110 zu erhöhen, ist die Haltemanschette 130 über jeweils eine Querstrebe 158 mit der jeweils nächstbenachbarten Rastrippe 142 jedes der beiden Schenkel 114 und 118 verbunden.

Zur weiteren Erhöhung der Formsteifigkeit der Stoßschutzecke 110 ist die Haltemanschette 130 über Streben 160 mit den Seitenwänden 124 des ersten Schenkels 114 und des zweiten Schenkels 118 verbunden.

Die gesamte Stoßschutzecke 110 ist vorzugsweise einstückig ausgebildet.

Als Material für die Stoßschutzecke 110 wird vorzugsweise ein Kunststoffmaterial, insbesondere Polyethylen, verwendet.

Das verwendete Kunststoffmaterial weist vorzugsweise eine Shore-Härte von ungefähr 85 bis ungefähr 90 auf.

Insbesondere für die Verwendung im Lebensmittelbereich ist es von Vorteil, wenn das verwendete Kunststoffmaterial bis zu einer Temperatur von ungefähr 85°C temperaturbeständig und desinfektionsmittelbeständig ist.

Die Stoßecke 110 kann beispielsweise in einem Spritzgießverfahren hergestellt werden.

Wie am besten aus Fig. 7 zu ersehen ist, sind die Deckwände 122 und die Seitenwände 124, jeweils auf ihrer Innenseite, mit an die Rastrippen 142, an die Querstreben 158 und an die Streben 160 angrenzenden und parallel zu denselben verlaufenden Nuten 161 versehen. Diese Nuten 161 haben die Aufgabe, ein gleichmäßiges Abkühlen der als Spritzgießteil hergestellten Stoßecke 110 zu bewirken. Dadurch wird die Ausbildung von Unebenheiten in den nach außen gewandten Sichtflächen der Deckwände 122 und der Seitenwände 124, welche ohne die Nuten 161 entstehen würden, verhindert.

Die Nuten 161 weisen beispielsweise eine Breite und eine Tiefe von jeweils ungefähr einem Millimeter auf.

Im am Servierwagen 100 montierten Zustand ist die Stoßschutzecke 110 mit dem unteren Auflagebord 108 verrastet, wie am besten aus Fig. 5 zu ersehen ist.

Das untere Auflagebord 108, welches aus einem Stahlblech, vorzugsweise aus einem Chromnickelstahlblech, hergestellt ist, weist eine mittige Vertiefung 162 zur Aufnahme der zu transportierenden Gegenstände und einen die Vertiefung 162 umgebenden, im wesentlichen horizontalen Randbereich 164 auf, der an seinem äußeren Rand um 90° nach unten abgekantet ist, um eine im wesentlichen vertikale Seitenwand 166 des unteren Auflagebords 108 zu bilden.

Diese Seitenwand 166 ist an ihrem unteren Ende nach innen eingerollt.

Im montierten Zustand der Stoßschutzecke 110 ist diese Einrollung 168 in den Rastaufnahmen 148 der Rastrippen 142 der Stoßschutzecke 110 aufgenommen, wobei die Seitenwand 166 des unteren Auflagebords 108 gegen den inneren Rand der Deckwand 122 und gegen den vertikalen Rand 150 der Rastaufnahmen 148 und die Einrollung 168 gegen die Rastnasen 156 der Rastrippen 142 anliegt.

Bei der Montage der Stoßschutzecke 110 wird dieselbe von unten, mit den Deckwänden 122 voran, auf die Seitenwand 166 des unteren Auflagebords 108 mit der Einrollung 168 aufgeschoben.

Sobald die Einrollung 168 die Rastnasen 156 erreicht, werden die Rastnasen 156 nach innen (d.h. in Fig. 5 nach links) weggebogen, um den Durchtritt der Einrollung 169 in die Rastaufnahmen 148 der Rastrippen 142 zu ermöglichen. Hat die Stelle größten Durchmessers der Einrollung 168 die durch die Rastnase 156 gebildete Engstelle passiert, so bewegen sich die Rastnasen 156 in ihre Ausgangsstellung zurück, in der sie jeweils eine Hinterschneidung bilden, welche verhindert, daß sich die Einrollung 168 wieder nach oben aus den Rastaufnahmen 148 herausbewegen kann.

In dieser Stellung sind somit die Seitenwand 166 des unteren Auflagebords 108 mit der Einrollung 168 einerseits und die Rastrippen 142 der Stoßschutzecke 110 andererseits miteinander verrastet.

Beim Aufschieben der Stoßschutzecke 110 auf die Einrollung 168 wird zugleich die Haltemanschette 130 über den unteren Endbereich des rohrförmigen Bügels 102 geschoben, dessen Außendurchmesser dem Innendurchmesser der Haltemanschette 130 entspricht.

In der Raststellung der Stoßschutzecke 110 fluchtet ein in dem Bügel 102 vorgesehenes Durchgangsloch mit einem der Durchtrittsschlitze 136 in der Haltemanschette 130.

Nach dem Einrasten der Stoßschutzecke 110 muß nur noch die der betreffenden Ecke des Servierwagens 100 zugeordnete Tragrolle 104 montiert werden.

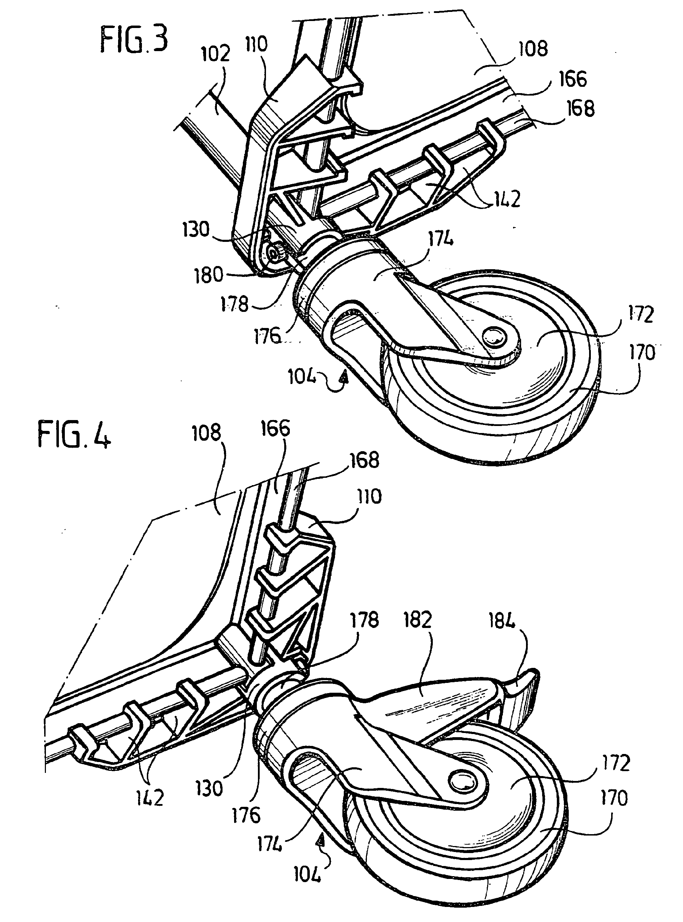

Wie beispielsweise aus den Fig. 3 und 4 zu ersehen ist, umfaßt jede der Tragrollen 104 einen mit einer Bereifung 170 versehenen Rollenkörper 172, welcher in einem Lagerbock 174 drehbar gelagert ist.

Jeder Lagerbock 174 ist über ein Drehgelenk 176 um eine vertikale Achse drehbar mit einem Haltezapfen 178 der Tragrolle 104 verbunden.

Zur Montage der Tragrolle 104 wird der Haltezapfen 178 so in den unteren Endbereich des Bügels 102 eingeschoben, daß er zumindest teilweise innerhalb der Haltemanschette 130 angeordnet ist, an deren Innenwand die Außenwand des Bügels 102 flächig anliegt.

In dem Haltezapfen 178 der Tragrolle 104 ist ein Gewindeloch vorgesehen, welches durch Drehen des Haltezapfens 178 um dessen vertikale Achse so angeordnet wird, daß es mit dem Durchgangsloch im Bügel 102 und mit einem der Durchtrittsschlitze 136 in der Haltemanschette fluchtet.

Anschließend wird eine Befestigungsschraube 180, beispielsweise eine Innensechskant-Schraube, durch den betreffenden Durchtrittsschlitz 136 der Haltemanschette 130 und das Durchgangsloch im Bügel 102 in das Gewindeloch der Befestigungsschraube 180 eingeführt und so weit eingedreht, bis der Kopf der Befestigungsschraube 180, dessen Durchmesser die Breite des Durchtrittsschlitzes 136 übertrifft, so gegen die Haltemanschette 130 festgezogen ist, daß der Haltezapfen 178 der Tragrolle 104 formschlüssig in dem Bügel 102 und reibschlüssig an der Haltemanschette 130 der Stoßschutzecke 110 gehalten ist.

Wie aus den Fig. 1, 2 und 4 zu ersehen ist, sind zwei der Tragrollen 104 ferner mit einer Abdeckung 182 versehen, welche sich von dem Lagerbock 174 ausgehend über den Rollenkörper 172 erstreckt und an ihrem dem Lagerbock 174 abgewandten Ende mit einem Feststellhebel 184 zum Arretieren des Rollenkörpers 172 in seiner Drehstellung relativ zu dem Lagerbock 174 versehen ist.

Wie aus den Fig. 1 und 2 zu ersehen ist, stehen die Seitenwände 124 der Stoßschutzecken 110 des Servierwagens 100 über die Seitenwände 166 des unteren Auflagebords 108 und über die Drehgelenke 176 der Tragrollen 104 nach außen vor, so daß ein externes Objekt, wie beispielsweise eine Wand, ein Möbelstück oder ein anderer Gegenstand, nicht direkt gegen das untere Auflagebord 108 oder die Drehgelenke 176 der Tragrollen 104 stoßen kann, sondern zunächst in Kontakt mit der Seitenwand 124 einer Stoßschutzecken 110 kommt, so daß der Stoß durch die Stoßschutzecke 110 abgefedert wird.

Sind die Stoßschutzecken 110 nach längerem Gebrauch unansehnlich geworden oder beschädigt, so können sie, unter Umkehrung der vorstehend angegebenen Montageschritte, ohne weiteres gegen neue Stoßschutzecken 110 ausgetauscht werden.

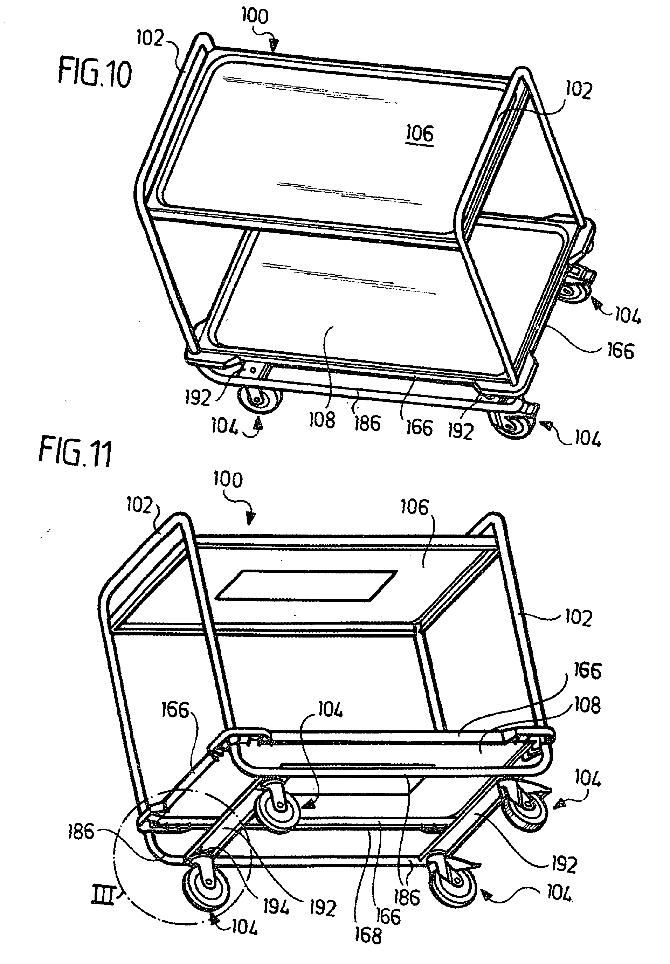

Eine in den Fig. 10 bis 13 dargestellte zweite Ausführungsform eines Servierwagens unterscheidet sich von der vorstehend beschriebenen ersten Ausführungsform dadurch, daß die Bügel 102 der zweiten Ausführungsform an ihren unteren Enden nicht mit den Tragrollen 104 des Servierwagens 100, sondern mit jeweils einem oberen Ende eines Zusatzbügels 186 verbunden sind.

Wie am besten aus den Fig. 10 und 11 zu ersehen ist, weisen die beiden Zusatzbügel 186 jeweils im wesentlichen die Form eines nach oben geöffneten U auf und verbinden jeweils ein unteres Ende des in Fahrtrichtung hinten liegen den Bügels 102 mit einem auf derselben Seite des Servierwagens 100 angeordneten unteren Ende des in Fahrtrichtung vorne liegenden Bügels 102.

Da bei dieser Ausführungsform die Bügel 102 nicht nur über die Auflageborde 106 und 108, sondern zusätzlich über die Zusatzbügel 186 miteinander verbunden sind, weist die zweite Ausführungsform des Servierwagens eine höhere Stabilität auf.

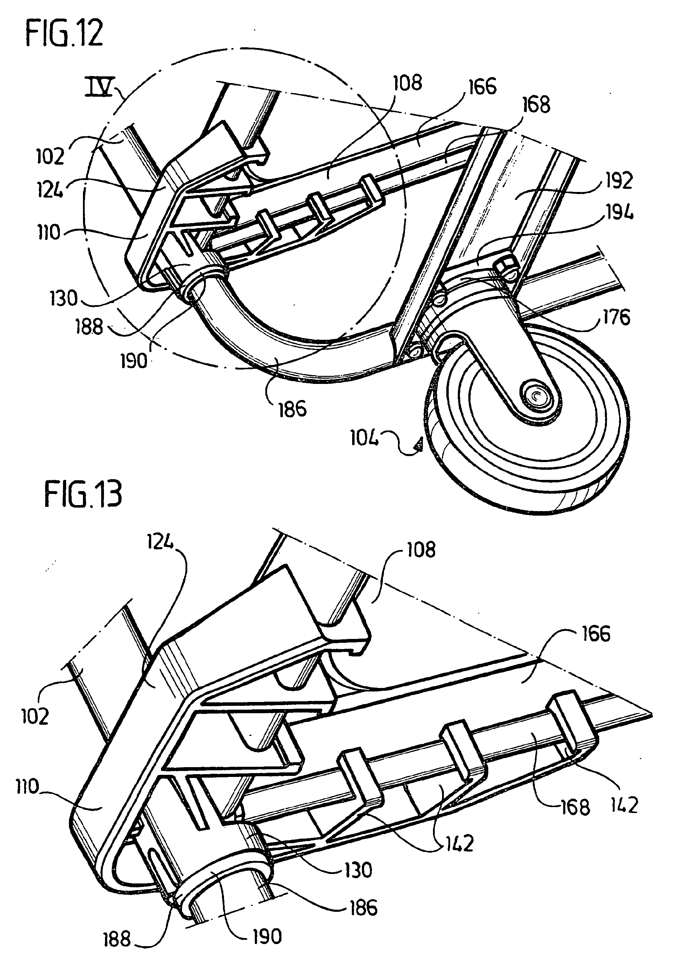

Die Verbindung jeweils eines Bügels 102 mit jeweils einem Zusatzbügel 186 erfolgt mittels jeweils eines Kunststoffverbinders 188, der einen ersten zylindrischen Abschnitt, dessen Außendurchmesser dem Innendurchmesser des rohrförmigen Bügels 102 entspricht, einen zweiten zylindrischen Abschnitt, dessen Außendurchmesser dem Innendurchmesser des rohrförmigen Zusatzbügels 186 entspricht, und einen zwischen dem ersten zylindrischen Abschnitt und dem zweiten zylindrischen Abschnitt angeordneten mittigen Flansch 190 umfaßt, der in den Fig. 12 und 13 zu sehen ist.

Zur Montage der Stoßschutzecke 110 bei der zweiten Ausführungsform des Servierwagens 100 wird wie folgt vorgegangen:

Zunächst wird (bei noch nicht montierten Zusatzbügeln 186) die jeweilige Stoßschutzecke 110 von unten auf die Seitenwand 166 des unteren Auflagebords 108 mit der Einrollung 168 aufgeschoben und mit derselben verrastet.

Dabei wird das untere Ende des Bügels 102 in die Haltemanschette 130 der Stoßschutzecke 110 so weit eingeschoben, daß der Bügel 102 mit dem unteren Rand der Haltemanschette 130 bündig abschließt. Der Außendurchmesser des rohrförmigen Bügels stimmt im wesentlichen mit dem Innendurchmesser der Haltemanschette 130 überein.

Anschließend wird der Kunststoffverbinder 188 mit dem ersten zylindrischen Abschnitt voran in das untere Ende des Bügels 102 eingeschoben, bis der Flansch 190 an dem unteren Rand der Haltemanschette 130 anliegt.

Die Oberseite des Flansches 190 bildet somit eine Stützfläche, auf welcher die Haltemanschette 130 der Stoßschutzecke 110 im montierten Zustand aufsitzt.

Nach der Montage aller Stoßschutzecken 110 und Kunststoffverbinder 188 werden die Zusatzbügel 186 von unten auf die zweiten zylindrischen Abschnitte der Kunststoffverbinder 188 aufgeschoben.

Wie aus den Fig. 10 bis 12 zu ersehen ist, sind die beiden Zusatzbügel 186 durch quer zu ihrer Längsrichtung ausgerichtete Stege 192, die an den Zusatzbügeln 186 beispielsweise angeschweißt sind, miteinander verbunden.

Die Tragrollen 104 weisen bei dieser Ausführungsform keinen Haltezapfen auf; vielmehr ist das jeweilige Drehgelenk 176 mit einem Befestigungsflansch 194 versehen, der mittels geeigneter Befestigungsmittel, beispielsweise Muttern und Schrauben, lösbar an der Unterseite des jeweiligen Stegs 192 festlegbar ist.

Da die Stoßschutzecken 110 bei der zweiten Ausführungsform auf der Oberseite der Flansche 190 der Kunststoffverbinder 188 aufsitzen, kann auf eine zusätzliche Fixierung der Stoßschutzecken 110 mittels in die Durchtrittsschlitz 136 eingesetzter Befestigungsschrauben verzichtet werden.

Im übrigen stimmt die zweite Ausführungsform eines Servierwagens 100 hinsichtlich Aufbau und Funktion mit der ersten Ausführungsform überein, auf deren vorstehende Beschreibung insoweit Bezug genommen wird. Insbesondere ist die bei der zweiten Ausführungsform verwendete Stoßschutzecke 110 mit der bei der ersten Ausführungsform verwendeten identisch.

## Patentansprüche

1. Stoßschutzelement für einen Transportwagen, insbesondere für einen Servierwagen (100),
wobei das Stoßschutzelement (110) mehrere Rastelemente (142) zum Verrasten mit einem Konstruktionselement (168) des Transportwagens, die längs einer ersten Längsrichtung (116) voneinander beabstandet angeordnet sind, und mehrere Rastelemente (142) zum Verrasten mit einem Konstruktionselement (168) des Transportwagens, die längs einer zweiten Längsrichtung (120) voneinander beabstandet angeordnet sind, umfasst, wobei die erste Längsrichtung (116) und die zweite Längsrichtung (120) quer zueinander ausgerichtet sind,
**dadurch gekennzeichnet,**
**dass** das Stoßschutzelement (110) eine rohrförmige Halterung (130) für ein Konstruktionselement (178, 102) des Transportwagens umfasst, deren Achse senkrecht zur ersten Längsrichtung (116) und senkrecht zur zweiten Längsrichtung (120) ausgerichtet ist.

2. Stoßschutzelement nach Anspruch 1, **dadurch gekennzeichnet, dass** das Rastelement (142) eine mit einer Hinterschneidung versehene Rastaufnahme (148) für das Konstruktionselement (168) des Transportwagens aufweist.

3. Stoßschutzelement nach einem der Ansprüche 1 oder 2, **dadurch gekennzeichnet, dass** das Stoßschutzelement (110) mehrere längs einer Längsrichtung (116, 120) des Stoßschutzelements (110) voneinander beabstandete Rastelemente (142) umfasst.

4. Stoßschutzelement nach einem der Ansprüche 1 bis 3, **dadurch gekennzeichnet, dass** die erste Längsrichtung (116) und die zweite Längsrichtung (120) im wesentlichen senkrecht zueinander ausgerichtet sind.

5. Stoßschutzelement nach einem der Ansprüche 1 bis 4, **dadurch gekennzeichnet, dass** das Rastelement (142) als Rippe ausgebildet ist.

6. Stoßschutzelement nach einem der Ansprüche 1 bis 5, **dadurch gekennzeichnet, dass** das Stoßschutzelement eine rohrförmige Halterung (130) für einen Bügel (102) des Transportwagens umfasst.

7. Stoßschutzelement nach einem der Ansprüche 1 bis 5, **dadurch gekennzeichnet, dass** das Stoßschutzelement eine rohrförmige Halterung für einen Haltezapfen einer Tragrolle des Transportwagens umfasst.

8. Stoßschutzelement nach einem der Ansprüche 1 bis 7, **dadurch gekennzeichnet, dass** die rohrförmige Halterung (130) an dem Konstruktionselement (102, 178) des Transportwagens mittels eines Befestigungsmittels, beispielsweise mittels einer Befestigungsschraube (180), lösbar festlegbar ist.

9. Stoßschutzelement nach Anspruch 8, **dadurch gekennzeichnet, dass** die rohrförmige Halterung (130) mit einer Durchgangsöffnung (136) für das Befestigungsmittel versehen ist.

10. Stoßschutzelement nach einem der Ansprüche 1 bis 9, **dadurch gekennzeichnet, dass** das Stoßschutzelement (110) einstückig ausgebildet ist.

11. Stoßschutzelement nach einem der Ansprüche 1 bis 10, **dadurch gekennzeichnet, dass** das Stoßschutzelement (110) aus einem Kunststoffmaterial, insbesondere aus Polyethylen, hergestellt ist.

12. Transportwagen, insbesondere Servierwagen (100), umfassend mindestens ein Stoßschutzelement (110) nach einem der Ansprüche 1 bis 11.

13. Transportwagen nach Anspruch 12, **dadurch gekennzeichnet, dass** der Transportwagen ein Blechformteil (108) mit einer Einrollung (168) umfasst, wobei die Einrollung (168) mit einem Rastelement (142) des Stoßschutzelements (110) verrastet ist.

14. Transportwagen nach Anspruch 13, **dadurch gekennzeichnet, dass** das Blechformteil (108) eine Auflagefläche für zu transportierende Gegenstände aufweist.

15. Transportwagen nach einem der Ansprüche 12 bis 14, **dadurch gekennzeichnet, dass** der Transportwagen mindestens eine Tragrolle (104) mit einem Haltezapfen (178) umfasst und dass der Haltezapfen (178) der Tragrolle (104) zumindest teilweise in der rohrförmigen Halterung (130) des Stoßschutzelements (110) aufgenommen ist.

16. Transportwagen nach einem der Ansprüche 12 bis 15, **dadurch gekennzeichnet, dass** der Transportwagen mindestens einen Bügel (102) umfasst und dass der Bügel (102) zumindest teilweise in der rohrförmigen Halterung (130) des Stoßschutzelements (110) aufgenommen ist.

17. Transportwagen nach einem der Ansprüche 12 bis 16, **dadurch gekennzeichnet, dass** der Transportwagen ein Stützelement (188) mit einer Stützfläche umfasst und dass das Stoßschutzelement (110) auf der Stützfläche des Stützelements (188) aufsitzt.

18. Transportwagen nach Anspruch 17, **dadurch gekennzeichnet, dass** das Stoßschutzelement (110) mit der rohrförmigen Halterung (130) auf der Stützfläche aufsitzt.

## Claims

1. Impact protecting element for a transporting trolley, in particular for a serving trolley (100), wherein the impact protecting element (110) comprises a plurality of latching elements (142) for latching to a construction element (168) of the transporting trolley, which are arranged spaced apart from one another along a first longitudinal direction (116), and a plurality of latching elements (142) for latching to a construction element (168) of the transporting trolley, which are arranged spaced apart from one another along a second longitudinal direction (120), the first longitudinal direction (116) and the second longitudinal direction (120) being oriented transversely with respect to one another, **characterised in that** the impact protecting element (110) comprises a tubular holder (130) for a construction element (178, 102) of the transporting trolley, the axis of which is oriented perpendicularly to the first longitudinal direction (116) and perpendicularly to the second longitudinal direction (120).

2. Impact protecting element according to claim 1, **characterised in that** the latching element (142) has a latching receiver (148), which is provided with an undercut, for the construction element (168) of the transporting trolley.

3. Impact protecting element according to either of claims 1 or 2, **characterised in that** the impact protecting element (110) comprises a plurality of latching elements (142) spaced apart from one another along a longitudinal direction (116, 120) of the impact protecting element (110).

4. Impact protecting element according to any one of claims 1 to 3, **characterised in that** the first longitudinal direction (116) and the second longitudinal direction (120) are oriented substantially perpendicularly with respect to one another.

5. Impact protecting element according to any one of claims 1 to 4, **characterised in that** the latching element (142) is configured as a rib.

6. Impact protecting element according to any one of claims 1 to 5, **characterised in that** the impact protecting element comprises a tubular holder (130) for a frame (102) of the transporting trolley.

7. Impact protecting element according to any one of claims 1 to 5, **characterised in that** the impact protecting element comprises a tubular holder for a holding pin of a carrying roller of the transporting trolley.

8. Impact protecting element according to any one of claims 1 to 7, **characterised in that** the tubular holder (130) can be detachably fixed to the construction element (102, 178) of the transporting trolley by means of a fastening means, for example by means of a fastening screw (180).

9. Impact protecting element according to claim 8, **characterised in that** the tubular holder (130) is provided with a through-opening (136) for the fastening means.

10. Impact protecting element according to any one of claims 1 to 9, **characterised in that** the impact protecting element (110) is configured in one piece.

11. Impact protecting element according to any one of claims 1 to 10, **characterised in that** the impact protecting element (110) is produced from a plastics material, in particular from polyethylene.

12. Transporting trolley, in particular serving trolley (100), comprising at least one impact protecting element (110) according to any one of claims 1 to 11.

13. Transporting trolley according to claim 12, **characterised in that** the transporting trolley comprises a sheet metal moulded part (108) with a rolled-in portion (168), the rolled-in portion (168) being latched to a latching element (142) of the impact protecting element (110).

14. Transporting trolley according to claim 13, **characterised in that** the sheet metal moulded part (108) has a support face for items to be transported.

15. Transporting trolley according to any one of claims 12 to 14, **characterised in that** the transporting trolley comprises at least one carrying roller (104) with a holding pin (178) and **in that** the holding pin (178) of the carrying roller (104) is at least partially received in the tubular holder (130) of the impact protecting element (110).

16. Transporting trolley according to any one of claims 12 to 15, **characterised in that** the transporting trolley comprises at least one frame (102) and **in that** the frame (102) is at least partially received in the tubular holder (130) of the impact protecting element (110).

17. Transporting trolley according to any one of claims 12 to 16, **characterised in that** the transporting trolley comprises a support element (188) with a support face and **in that** the impact protecting element (110) is seated on the support face of the support element (188).

18. Transporting trolley according to claim 17, **characterised in that** the impact protecting element (110) with the tubular holder (130) is seated on the support face.

## Revendications

1. Élément de protection contre les chocs pour un chariot de transport, en particulier pour une desserte (100),
l'élément de protection contre les chocs (110) comportant plusieurs éléments d'encliquetage (142) destinés à s'encliqueter avec un élément de construction (168) du chariot de transport, qui sont disposés le long d'une première direction longitudinale (116) en étant espacés les uns des autres, et plusieurs éléments d'encliquetage (142) destinés à s'encliqueter avec un élément de construction (168) du chariot de transport, qui sont disposés en étant espacés les uns des autres le logement d'une seconde direction longitudinale (120), la première direction longitudinale (116) et la seconde direction longitudinale (120) étant orientées transversalement l'une à l'autre,
**caractérisé en ce que**
l'élément de protection contre les chocs (110) comporte une fixation tubulaire (130) pour un élément de construction (178, 102) du chariot de transport, dont l'axe est orienté perpendiculairement à la première direction longitudinale (116) et perpendiculairement à la seconde direction longitudinale (120).

2. Élément de protection contre les chocs selon la revendication 1, **caractérisé en ce que** l'élément d'encliquetage (142) comprend une réception de cliquet (148) pourvue d'une contre-dépouille pour l'élément de construction (168) du chariot de transport.

3. Élément de protection contre les chocs selon l'une quelconque des revendications 1 ou 2, **caractérisé en ce que** l'élément de protection contre les chocs (110) comporte plusieurs éléments d'encliquetage (142) espacés les uns des autres le long d'une direction longitudinale (116, 120) de l'élément de protection contre les chocs (110).

4. Élément de protection contre les chocs selon l'une quelconque des revendications 1 à 3, **caractérisé en ce que** la première direction longitudinale (116) et la seconde direction longitudinale (120) sont orientées sensiblement perpendiculairement l'une à l'autre.

5. Élément de protection contre les chocs selon l'une quelconque des revendications 1 à 4, **caractérisé en ce que** l'élément d'encliquetage (142) est conçu comme une nervure.

6. Élément de protection contre les chocs selon l'une quelconque des revendications 1 à 5, **caractérisé en ce que** l'élément de protection contre les chocs comporte une fixation tubulaire (130) pour un étrier (102) du chariot de transport.

7. Élément de protection contre les chocs selon l'une quelconque des revendications 1 à 5, **caractérisé en ce que** l'élément de protection contre les chocs comporte une fixation tubulaire pour un tenon d'un rouleau de support du chariot de transport.

8. Élément de protection contre les chocs selon l'une quelconque des revendications 1 à 7, **caractérisé en ce que** la fixation tubulaire (130) peut être fixée de manière amovible à l'élément de construction (102, 178) du chariot de transport à l'aide d'un moyen de fixation, par exemple à l'aide d'une vis de fixation (180).

9. Élément de protection contre les chocs selon la revendication 8, **caractérisé en ce que** la fixation tubulaire (130) est pourvue d'une ouverture de passage (136) pour le moyen de fixation.

10. Élément de protection contre les chocs selon l'une quelconque des revendications 1 à 9, **caractérisé en ce que** l'élément de protection contre les chocs (110) est conçu en une seule pièce.

11. Élément de protection contre les chocs selon l'une quelconque des revendications 1 à 10, **caractérisé en ce que** l'élément de protection contre les chocs (110) est fabriqué à partir d'une matière synthétique, en particulier en polyéthylène.

12. Chariot de transport, en particulier desserte (100), comportant au moins un élément de protection contre les chocs (110) selon l'une quelconque des revendications 1 à 11.

13. Chariot de transport selon la revendication 12, **caractérisé en ce que** le chariot de transport comporte une pièce moulée en tôle (108) dotée d'un enroulement (168), l'enroulement (168) étant encliqueté avec un élément d'encliquetage (142) de l'élément de protection contre les chocs (110).

14. Chariot de transport selon la revendication 13, **caractérisé en ce que** la pièce moulée en tôle (108) comprend une surface d'appui pour des objets à transporter.

15. Chariot de transport selon l'une quelconque des revendications 12 à 14, **caractérisé en ce que** le chariot de transport comporte au moins un rouleau de support (104) doté d'un tenon (178) et **en ce que** le tourillon de retenue (178) du rouleau de support (1.04) est reçu au moins en partie dans la fixation tubulaire (130) de l'élément de protection contre les chocs (110).

16. Chariot de transport selon l'une quelconque des revendications 12 à 15, **caractérisé en ce que** le chariot de transport comporte au moins un étrier (102) et **en ce que** l'étrier (102) est reçu au moins en partie dans la fixation tubulaire (130) de l'élément de protection contre les chocs (110).

17. Chariot de transport selon l'une quelconque des revendications 12 à 16, **caractérisé en ce que** le chariot de transport comporte un élément d'appui (188) doté d'une surface d'appui et **en ce que** l'élément de protection contre les chocs (110) repose sur la surface d'appui de l'élément d' appui (188).

18. Chariot de transport selon la revendication 17, **caractérisé en ce que** l'élément de protection contre les chocs (110) doté de la fixation tubulaire (130) repose sur la surface d'appui.
